(19) Europäisches Patentamt
European Patent Office
Office européen des brevets

(11) EP 1 721 922 A1

(12) # EUROPEAN PATENT APPLICATION
published in accordance with Art. 158(3) EPC

(43) Date of publication:
**15.11.2006 Bulletin 2006/46**

(21) Application number: **05709917.8**

(22) Date of filing: **02.02.2005**

(51) Int Cl.:
***C08G 61/00*** *(2006.01)* ***H01B 1/06*** *(2006.01)*
***H01M 8/02*** *(2006.01)*

(86) International application number:
**PCT/JP2005/001865**

(87) International publication number:
**WO 2005/075535 (18.08.2005 Gazette 2005/33)**

(84) Designated Contracting States:
**DE FR GB**

(30) Priority: **05.02.2004 JP 2004029040**
**20.05.2004 JP 2004150075**

(71) Applicant: **Sumitomo Chemical Company, Limited**
**Tokyo 104-8260 (JP)**

(72) Inventors:
- **ONODERA, Toru**
  **Tsukuba-shi, Ibaraki 3050821 (JP)**
- **OHUCHI, Kazuei**
  **Tsukuba-shi, Ibaraki 3050005 (JP)**
- **SASAKI, Shigeru**
  **Tsukuba-shi, Ibaraki 3003261 (JP)**

(74) Representative: **Vossius & Partner**
**Siebertstrasse 4**
**81675 München (DE)**

(54) ## METHOD FOR PRODUCING POLYMER COMPOUND

(57) A method for polymerizing a monomer represented by the formula (1) or copolymerizing a monomer represented by the formula (1) and a monomer represented by the formula (2) in the co-presence of a condensation agent comprising a transition metal complex, to thereby produce a polymer compound represented by the formula (3): $X^1$-$Ar^1$-$X^2$(1)$X^3$-$Ar^2$-$X^4$(2)-($Ar^1$)q-($Ar^2$) r-(3)[$X^1$,$X^2$,$X^3$ and $X^4$ represent groups separating in the condensation, $Ar^1$ represents a two-valent aromatic group having at least a sulfonic acid or a sulfonic acid via a connecting group as a substitutent, q represents a positive number, r represents 0 or a positive number, and the sum of q and r is 300 or more], **characterized in that** the above condensation agent and the above monomer are mixed at a temperature of 45°C or higher. The above method allows the production of a polymer compound which exhibits excellent fuel cell characteristics and has a high molecular weight.

EP 1 721 922 A1

## Description

Technical Field

The present invention relates to methods for producing polymer compounds, and in more detail to methods for producing polymer compounds suitably used for fuel cells.

Background Art

Polymer compounds having proton conductivity, i.e. polymer electrolytes, are used for a barrier membrane of electrochemical devices such as primary batteries, secondary batteries, and polymer electrolyte fuel cells. As example, a polymer electrolyte including an ingredient of an aliphatic polymer compound of which side chain is perfluoroalkylsufonic acid with strong acidity and main chain is perfluoroalkane, which is typically represented by Nafion (registered trademark of Du Pont), has been conventionally used for a membrane or an ion-exchanging material of fuel cells because the polymer allows excellent quality of power generation for the cells. Problems, however, are pointed out that such polymer electrolyte is too expensive and weak in heat resistability.
On the other hand, a polyphenylene having a sulfonic acid is known as a polymer electrolyte with enhanced heat resistability; and the inventors of the present invention have proposed a method for producing such polymer compound which method comprises polymerizing a monomer of dihalogeno aromatic sulfonic acids or co-polymerizing monomers of dihalogeno aromatic sulfonic acids and dihalogeno aromatics in the presence of a condensation reagent comprising a transition metal complex at a temperature of about 0 to about 250 ° C (Japan Unexamined Patent Publication (Kokai) No. 2003-238665).
The polymer compound obtained by the above-mentioned method, however, does not still satisfy properties required for an ingredient of fuel cells such as water resistability, solvent resistability and the like; therefore, a method for producing a polymer compound capable of solving the problems discussed above has been desired.

Disclosure of the Invention

The inventors of the present invention have further studied the above-described polymerization method which uses a condensation reagent comprising a transition metal complex, and found that the temperature for mixing the condensation reagent and monomer (s) is important, mixing them at a specific temperature of 45° C or more allows to produce a polymer compound having a high molecular weight, and the polymer compound thus obtained has excellent properties required for an ingredient of fuel cells such as water resistability, solvent resistability and the like, thereby accomplished the invention after having implemented further studies.
The invention provides a method for producing a polymer compound, wherein said method comprises a method for polymerizing a monomer represented by the following formula (1) in the presence of a condensation reagent comprising a transition metal complex to produce a homopolymer:

$$X^1\text{-}Ar^1\text{-}X^2 \qquad (1)$$

(wherein $X^1$ and $X^2$ independently represent groups to be eliminated in condensation, and $Ar^1$ represents di-valent aromatic group having a substituent group comprising at least a sulfonic acid or a salt thereof, or a sulfonic acid via a connecting group or a salt thereof), or for copolymerizing a monomer represented by the above-described formula (1) and a monomer represented by the following formula (2) in the presence of the condensation reagent to produce a copolymer represented by the following formula (3):

$$X^3\text{-}Ar^2\text{-}X^4 \qquad (2)$$

(wherein $X^3$ and $X^4$ independently represent groups to be eliminated in condensation, and $Ar^2$ represents di-valent aromatic group optionally having a substituent group),

$$\text{-}(Ar^1)q\text{-}(Ar^2)r\text{-} \qquad (3)$$

(wherein $Ar^1$ and $Ar^2$ respectively represent the same meanings described above, q represents a positive number, r represents 0 or a positive number, and the sum of q and r is 300 or more) ; and wherein said condensation reagent and said monomer (s) are mixed at a temperature of 45 °C or more.
The invention further provides the method for producing a polymer compound, [2] wherein the condensation reagent is a transition metal complex, [3] wherein the transition metal complex is a zero-valent transition metal complex,

[4] wherein the zero-valent transition metal complex comprises at least one selected from the group consisting of a zero-valent nickel complex and a zero-valent palladium complex; [5] the method according to the above-described [4], wherein the zero-valent nickel complex is bis(1,5-cyclooctadiene)nickel(0); and [6] the method according to any one of the above-described [1] to [5], wherein 2,2'-bipyridyl is further co-present.

The invention further provides [7] a polymer compound produced by any one of the methods according to [1] to [6]; [8] a polymer compound comprising the above-mentioned formula (3) and having a number-average molecular weight of $5 \times 10^4$ or more in terms of polystyrene standard; [9] the polymer compound according to [7] or [8], having an ion-exchange capacity of 0.8 meq/g or more; [10] a polymer electrolyte comprising an ingredient comprising the polymer compound(s) according to [7] to [9]; [11] a polymer electrolyte membrane comprising the polymer electrolyte according to [10]; [12] a catalyst composition comprising the polymer electrolyte according to [10]; and

[13] and [14] a polymer electrolyte fuel cell comprising the polymer electrolyte membrane according to [11] and/or the catalyst composition according to [12].

Best Mode for Carrying Out the Invention

The invention is explained in more detail as follows.

$X^1$ and $X^2$ in the formula (1) independently represent groups which are eliminated in condensation.

The groups to be eliminated in condensation include, for example, halogen atoms such as chlorine atom, bromine atom, and iodine atoms, p-toluenesulfonyloxy group, methanesulfonyloxy group, and trifluoromethanesulfonyloxy group. Among these, chlorine atom and bromine atom are preferable because the monomer therewith is easily commercially available or synthesizable.

$Ar^1$ represents di-valent aromatic group having a substituent group including at least a sulfonic acid or a salt thereof, or a sulfonic acid via a connecting group or a salt thereof.

The di-valent aromatic group includes hydrocarbon-based aromatic groups such as phenylene, naphthylene, and fluorenediyl; and

heteroaromatic groups such as pyridinediyl, quinoxalinediyl, and thiophenediyl; and preferably hydrocarbon-based aromatic groups.

The sulfonic acid via a connecting group or a salt thereof include, for example, sulfonic acids via the following connecting groups or a salt thereof; the connecting groups being lower alkylene groups having carbon numbers of about 1 to 6; lower oxyalkylene groups having carbon numbers of about 1 to 6; arylene groups such as phenylene group and naphthylene group; aralkylene groups such as methylenephenylene and

dimethylenephenylene; alkylenephenylenealkylene groups such as xylylene; carbonylalkylene groups having carbon numbers of 1 to about 7; and carbonylarylene groups having carbon numbers of about 7 to 20.

The sulfonic acid salts include, for example, salts of alkali metal such as sodium, potassium, and lithium; salts of alkali earth metal such as magnesium and calcium; and salts of ammonium such as ammonia and methylamine. The sulfonic acid in a free acid state is preferable to be used for a polymer electrolyte membrane of fuel cells.

$Ar^1$ may further have a substituent group not involved in the polymerization reaction, besides the substituents including a sulfonic acid or a salt thereof, or a sulfonic acid via a connecting group or a salt thereof; and examples of the substituent group non-involved in reaction include alkyl groups with carbon numbers of 1 to 10 optionally having a substituent group, alkoxy groups with carbon numbers of 1 to 10 optionally having a substituent group, aryl groups with carbon numbers of 6 to 18 optionally having a substituent group, aryloxy groups with carbon numbers of 6 to 18 optionally having a substituent group, acyl groups with carbon numbers of 2 to 20 optionally having a substituent group, and fluorine atom.

Examples of the alkyl groups with carbon numbers of 1 to 10 include methyl, ethyl, n-propyl, isopropyl, allyl, n-butyl, sec-butyl, tert-butyl, isobutyl, n-pentyl, 2,2-dimethylpropyl, cyclopentyl, n-hexyl, cyclohexyl, 2-methylpentyl, and 2-ethylhexyl; and these groups may be further substituted with fluorine atom, nitrile group, methoxy group, ethoxy group, isopropyloxy group, phenyl group, naphthyl group, phenoxy group, naphthyloxy group, and the like.

Examples of the alkoxy groups with carbon numbers of 1 to 10 include methoxy, ethoxy, n-propyloxy, isopropyloxy, n-butyloxy, sec-butyloxy, tert-butyloxy, isobutyloxy, n-pentyloxy, 2,2-dimethylpropyloxy, cyclopentyloxy, n-hexyloxy, cyclohexyloxy, 2-methylpentyloxy, and 2-ethylhexyloxy; and these groups may be further substituted with fluorine atom, nitrile group, methoxy group, ethoxy group, isopropyloxy group, phenyl group, naphthyl group, phenoxy group, naphthyloxy group, and the like.

Examples of the aryl groups with carbon numbers of 6 to 18 include phenyl group and naphthyl group; and these groups may be further substituted with fluorine atom, methoxy group, ethoxy group, isopropyloxy group, phenyl group, naphthyl group, phenoxy group, naphthyloxy group, and the like. Examples of the aryloxy groups with carbon numbers of 6 to 18 include phenoxy group and naphthyloxy group; and these groups may be further substituted with fluorine atom, methoxy group, ethoxy group, isopropyloxy group, phenyl group, naphthyl group, phenoxy group, and naphthyloxy group.

Examples of the acyl groups with carbon numbers of 2 to 20 include acetyl, propionyl, butyryl, isobutyryl, benzoyl, 1-naphthoyl, and 2-naphthoyl; and these groups may be further substituted with fluorine atom, methoxy group, ethoxy group, isopropyloxy group, phenyl group, naphthyl group, phenoxy group, naphthyloxy group, and the like.

The preferable examples of the monomer represented by the formula (1) include monomers represented by the formulas (4) and (5), wherein the sulfonic acid moiety(ies) thereof may form a salt:

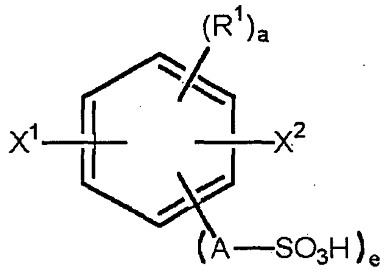

(4)

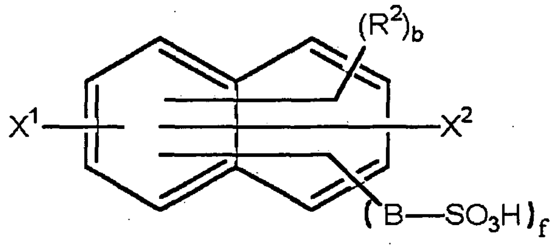

(5)

(wherein $X^1$ and $X^2$ represent the same meanings described above; $R^1$ and $R^2$ independently represent the following groups and may be respectively same or different when being present in a plural number, the groups being alkyl groups with carbon numbers of 1 to 10 optionally having a substituent group, alkoxy groups with carbon numbers of 1 to 10 optionally having a substituent group, aryl groups with carbon numbers of 6 to 18 optionally having a substituent group, aryloxy groups with carbon numbers of 6 to 18 optionally having a substituent group, acyl groups with carbon numbers of 2 to 20 optionally having a substituent group, or fluorine atom; A and B independently represent a direct bonding or a connecting group and may be respectively same or different when being present in a plural number; e and f independently represent a number of 1 to 4, a represents a number of 0 to (4 - e); and b represents a number of 0 to (6 - f))·

The specific examples of $X^1$ and $X^2$, and the specific examples of the groups of $R^1$, $R^2$, A, and B include the same mentioned above.

The typical examples of the monomer (4) include the following compounds substituted with a sulfonic acid directly or via a connecting group mentioned above, the compounds being 1,4-dichlorobenzene, 1,4-dibromobenzene, 1,4-diiodobenzene, 2,5-dichlorotoluene, 2,5-dibromotoluene, 2,5-diiodotoluene, 2,5-dichloroanisole, 2,5-dibromoanisole, 2,5-diiodoanisole, 2,5-dichlorobiphenyl, 2,5-dibromobiphenyl, 2,5-diiodobiphenyl, 2,5-dichlorobenzophenone, 2,5-dibromobenzophenone, 2,5-diiodobenzophenone, 2,5-dichlorodiphenylsulfone, 2,5-dibromo-dichlorodiphenylsulfone, and 2,5-diiodo-dichlorodiphenylsulfone.

The typical examples of the monomer (5) include the following compounds substituted with a sulfonic acid directly or via a connecting group mentioned above, the compounds being 1,4-dichloronaphthalene, 1,4-dibromonaphthalene, 1,4-diiodonaphthalene, 1,5-dichloronaphthalene, 1,5-dibromonaphthalene, 1,5-diiodonaphthalene, 2,6-dichloronaphthalene, 2,6-dibromonaphthalene, and 2,6-diiodonaphthalene.

$X^3$ and $X^4$ in the monomer (2), which monomer is used as the rest of a co-monomer for copolymerization, independently represent groups which are eliminated in condensation, and $Ar^2$ represents di-valent aromatic group optionally having a substituent group.

The groups to be eliminated in condensation include same groups exemplified in the monomer (1); and the preferable groups thereof also include same groups preferred therein.

The di-valent aromatic group includes same groups exemplified in the monomer (1); and the preferable groups thereof also include same groups preferred therein.

The di-valent aromatic group may have a substituent group not involved in the polymerization reaction such as alkyl groups with carbon numbers of 1 to 10 optionally having a substituent group, alkoxy groups with carbon numbers of 1 to 10 optionally having a substituent group, aryl groups with carbon numbers of 6 to 18 optionally having a substituent group, aryloxy groups with carbon numbers of 6 to 18 optionally having a substituent group, acyl groups with carbon numbers of 2 to 20 optionally having a substituent group, and fluorine atom.

Regarding to the alkyl groups with carbon numbers of 1 to 10 optionally having a substituent group, alkoxy groups with carbon numbers of 1 to 10 optionally having a substituent group, aryl groups with carbon numbers of 6 to 18 optionally having a substituent group, and acyl groups with carbon numbers of 2 to 20 optionally having a substituent group, included are same groups also exemplified in the monomer (1).

The preferable examples of the monomer represented by the formula (2) include monomers represented by the formulas (6) and (7) respectively

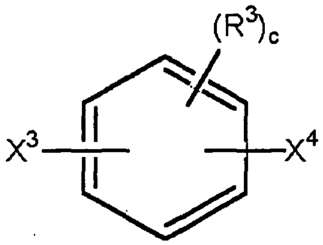

(6)

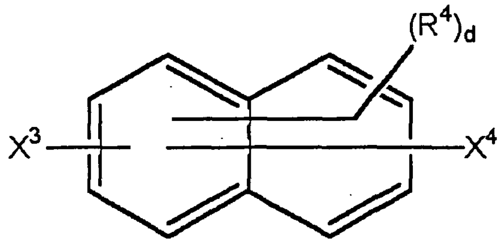

(7)

(wherein $X^3$ and $X^4$ represent the same meanings mentioned above; $R^3$ and $R^4$ independently represent the following groups and may be respectively same or different when being present in a plural number, the groups being alkyl groups with carbon numbers of 1 to 10 optionally having a substituent group, alkoxy groups with carbon numbers of 1 to 10 optionally having a substituent group, aryl groups with carbon numbers of 6 to 18 optionally having a substituent group, aryloxy groups with carbon numbers of 6 to 18 optionally having a substituent group, acyl groups with carbon numbers of 2 to 20 optionally having a substituent group, or fluorine atom; c represents a number of 0 to 4; and d represents a number of 0 to 6).

The specific examples of $X^3$ and $X^4$, and the specific example of the $R^3$ and $R^4$ groups include the same mentioned above.

The typical examples of the monomer (6) include 1,4-dichlorobenzene , 1,4-dibromobenzene, 1,4-diiodobenzene, 2,5-dichlorotoluene, 2,5-dibromotoluene, 2,5-diiodotoluene, 2,5-dichloroanisole, 2,5-dibromoanisole, 2,5-diiodoanisole, 2,5-dichlorobiphenyl, 2,5-dibromobiphenyl, 2,5-diiodobiphenyl, 2,5-dichlorobenzophenone, 2,5-dibromobenzophenone, 2,5-diiodobenzophenone, 2,5-dichlorodiphenylsulfone, 2,5-dibromodiphenylsulfone, and 2,5-diiododiphenylsulfone.

The typical examples of the monomer (6) include 1,4-dichloronaphthalene, 1,4-dibromonaphthalene, 1,4-diiodonaphthalene, 1,5-dichloronaphthalene, 1,5-dibromonaphthalene, 1,5-diiodonaphthalene, 2,6-dichloronaphthalene, 2,6-dibromonaphthalene, and 2,6-diiodonaphthalene.

The condensation reagent used for polymerizing the monomer(s) described above serves to promote a condensation reaction when the monomer(s) used in the invention will be condensed. The examples of the condensation reagent include a transition metal complex.

The transition metal complex is a transition metal which coordinates a halogen or a ligand mentioned hereinafter and contains at least one ligand mentioned hereinafter. The transition metal complex may be commercial products or compounds synthesized intentionally.

The transition metal complex may be synthesized with known methods such as reacting a transition metal salt or transition metal oxide with a ligand. The resultantly synthesized transition metal complex may be used after being isolated from a reactant or in situ without isolation.

The ligand includes, for example, acetate, acetylacetonate, 2,2'-bipyridyl, 1,10-phenanthroline, methylenebisoxazoline, N,N,N',N'-tetramethylethylenediamine, triphenylphosphine, tritolylphosphine, tributylphosphine, triphenoxyphosphine, 1,2-bisdiphenylphosphinoethane, and 1,3-bisdiphenylphosphinopropane.

The transition metal complex used as a condensation reagent in the invention include, for example, nickel complexes, palladium complexes, platinum complexes, and copper complexes; and among these, preferable are zero-valent complexes such as zero-valent nickel complexes and zero-valent palladium complexes, and more preferable are zero-valent nickel complexes.

The zero-valent nickel complexes include, for example, bis(1,5-cyclooctadiene)nickel(0), (ethylene)bis(triphenylphosphine)nickel(0), and tetrakis(triphenylphosphine)nickel; and among these, preferably used is bis (1,5-cyclooctadiene)nickel(0) due to its inexpensive price.

The zero-valent palladium complexes include, for example, tetrakis(triphenylphosphine)palladium(0).

These zero-valent transition metal complexes may be commercial products or compounds synthesized intentionally.

The zero-valent transition metal complex may be synthesized with known methods such as causing the valent value of a transition metal compound to be zero with a reducing reagent such as zinc or magnesium. The resultantly synthesized zero-valent transition metal complex may be used after being isolated from a reactant or in situ without isolation.

When the zero-valent transition metal complex is produced from a transition metal compound with a reducing

reagent, the transition metal compound to be used is usually di-valent transition metals; and among them, preferable are di-valent nickel compounds and di-valent palladium compounds. The di-valent nickel compounds include nickel chloride, nickel bromide, nickel iodide, nickel acetate, nickel acetylacetonate, nickel bis(triphenylphosphine) chloride, nickel bis(triphenylphosphine) bromide; nickel bis(triphenylphosphine) iodide, and the like; and the di-valent palladium compounds include palladium chloride, palladium bromide, palladium iodide, palladium acetate, and the like.

The reducing reagents include zinc, magnesium, sodium hydride, hydrazine, and derivatives thereof and lithium aluminum hydride. Depending on requirements, co-used therewith may be ammonium iodide, trimethylammonium iodide, triethylammonium iodide, lithium iodide, sodium iodide, potassium iodide, and the like.

When the transition metal complex mentioned above is used as a condensation reagent, addition of a compound possible to be a ligand of the transition metal complex used is preferable in view of enhancing a yield of a polymer. The compound added may be same or different with the ligand of the transition metal complex used. The examples of the ligand include same ligands mentioned above; and preferable are triphenylphosphine and 2,2'-bipyridyl in view of their versatility, inexpensive price, and reactivity with a condensation reagent and a polymer yield. Especially, a combination of 2,2'-bipyridyl and bis(1,5-cyclooctadiene)nickel(0) is often preferable because the combination enhances a polymer yield.

The condensation reagent is used in an amount of 0.1 mole or more times the total amount of the monomers represented by the formulas (1) and (2). When the condensation reagent is used too little, it tends to decrease a molecular weight of a polymer obtained, thus the condensation reagent is used preferably in an amount of 1.5 mole or more times, more preferably 1.8 mole or more times, and even preferably 2.1 mole or more times. Although the condensation reagent has no upper limit in its usage, too much usage thereof tends to cause troubles in a post treatment, thus its usage is preferably 5.0 mole or less times.

When a zero-valent transition metal complex is synthesized from a transition metal compound with using a reducing reagent, conditions may be adjusted to contain the amount of the zero-valent transition metal complex synthesized within the above-mentioned range; for example, the transition metal complex is used in an amount of 0.01 mole or more times the total amount of the monomers represented by the formulas (1) and (2), and preferably 0.03 mole or more times. Although the transition metal compound has no upper limit in its usage, too much usage thereof tends to cause troubles in a post treatment, thus its usage is preferably 1.0 mole or less times. The reducing reagent is used, for example, in an amount of 0.5 mole or more times the total amount of the monomers represented by the formulas (1) and (2) and preferably 1.0 mole ore more times. Although the reducing reagent has no upper limit in its usage, too much usage thereof tends to cause troubles in a post treatment, thus its usage is preferably 10 mole or less times.

When a transition metal complex or zero-valent transition metal complex is synthesized separately and used in situ without isolation, the transition metal complex or zero-valent transition metal complex is synthesized, followed by being adjusted at a predetermined temperature to mix with monomer(s) as mentioned hereinafter.

The invention requires polymerizing the monomer(s) mentioned above in the co-presence of the condensation reagent mentioned above and mixing the condensation reagent and the monomer(s)at a temperature of 45 °C or more.

Condensation reaction generally progress after mixing a condensation reagent and monomer(s).

If the mixing temperature is less than 45 ° C, for example, even if the mixing is carried out at 25 °C and then a resulting mixture is heated up to 45 ° C or more to continue the reaction, it is difficult to obtain a polymer with high molecular weight; thus a high molecular weight polymer can be obtained only by performing the mixing at 45 ° C or more. The mixing temperature is usually 200 °C or less, and preferably about 50 °C or more and about 100 °C or less.

The condensation reagent and the monomer (s) may be mixed by sequentially or simultaneously adding to a reactor. When being added, they are preferably gradually put in to avoid excess heat generation although any of them may be put in at once; addition under co-presence of a solvent is also preferable.

After mixing the condensation reagent and the monomer(s), the mixture is controlled to carry out a condensation reaction usually at about 45 to about 200 °C, and preferably at about 50 to about 100 °C. A reaction time is usually about 0.25 to about 200 hours.

When two or more kinds of monomers are applied, all of the monomers subjected to the reaction are preferably mixed within the temperature range mentioned above to obtain a copolymer with a high molecular weight. However, if any of monomers has a reactivity as high as being capable of causing a high molecular weight even at out of the above-mentioned temperature range, such highly reactive monomer may be mixed with the condensation reagent at a temperature out of the temperature range mentioned above.

The solvent used for the invention include, for example, aprotic polar solvents such as N,N-dimethylformamide, N,N-dimethylacetamide (DMAc), N-methylpyrrolidon, hexamethylphosphorictriamide, and dimethylsulfoxide (DMSO); aromatic hydrocarbon-based solvents such as toluene, xylene, mesitylene, benzene, and n-butyl benzene; aliphatic hydrocarbon-based solvents such as tetralin and decalin; ether-based solvents such as tetrahydrofuran, 1,4-dioxan, dibutylether, tert-butylmethylether, and dimethoxyethane; ester-based solvents such as ethylacetate, butylacetate, and methyl benzoate; and halogenated alkyl-based solvents such as chloroform and dichloroethane.

It is desired that a polymer compound is sufficiently dissolved to obtain a polymer compound with a high

molecular weight; thus preferable are good solvents for the polymer compound such as tetrahydrofuran, 1,4-dioxan, N, N-dimethylformamide, N, N-dimethylacetamide, dimethylsulfoxide, and toluene. These solvent may be used in combination of two or more kinds thereof.

An amount of the solvent used is not particularly limited; however, too low concentration causes difficulties in recovery of a polymer compound produced, on the other hand too high concentration causes difficulties in stirring the reactant; therefore, the total amount of monomer and condensation reagent is used preferably in an amount of 0.05 to 40 % by weight based on the total amount of the solvent, monomer, and condensation reagent as 100% by weight, and more preferably 0.1 to 25 % by weight.

Thus a polymer compound intended is produced; it may be isolated from a reactant mixture with conventional known methods. For example, the objected polymer may be taken by being precipitated with addition of a poor solvent, followed by collection with filtration; furthermore, depending on requirements, being purified with conventional purification means such as washing with water, or re-precipitation with a good solvent and poor solvent. The polymer compound may be subjected to cation exchange with usual methods. A polymerization degree or polymer structure may be determined with usual methods such as GPC analysis or NMR analysis.

The polymer compound produced by the method of the invention has a sum of the number of repeating unit of the monomer(s) (a sum of q and r of the formula (3)) of 300 or more; and has preferably a number-average molecular weight in terms of polystyrene standard of $5 \times 10^4$ or more in view of providing a polymer electrolyte with water resistibility, solvent resistibility such as methanol resistibility, and excellent quality for fuel cell.

Explained as follows is that the polymer compound of the invention is applied for a barrier membrane of electrochemical devices such as fuel cells.

In such application, the polymer compound of the invention is usually used in the form of a film; and methods for producing a film are not particularly limited, for example, preferably used is a method of forming a film from a polymer solution (solution casting method)

Specifically, a copolymer is dissolved with an appropriate solvent to obtain a solution, the solution is caston a glass plate, and then the solvent is removed to form a film. The solvents used for film forming are not particularly limited as long as being able to dissolve a copolymer and then to be removed; preferably used are aprotic polar solvents such as N, N-dimethylformamide, DMAc, N-methyl-2-pyrrolidone, and DMSO; chlorine-based solvents such as dichloromethane, chloroform, 1,2-dichloroethane, chlorobenzene, and dichlorobenzene; alcohols such as methanol, ethanol, and propanol; and alkyleneglycol monoalkyl ethers such as ethyleneglycol monomethyl ether, ethyleneglycol monoethyl ether, propyleneglycol monomethyl ether, and propyleneglycol monoethyl ether. These may be used alone or as a mixture of two or more kinds thereof depending on requirements. Among these, preferable are dimethylsulfoxide, N,N-dimethylformamide, N,N-dimethylacetamide, N-methylpyrrolidon and the like due to their excellent ability to dissolve polymers.

A thickness of the film is not particularly limited, being preferably 10 to 300 μm, and more preferably 20 to 100 μm. When the film thickness is less than 10 μm, it often does not satisfy a strength required for practical usage; and when being more than 300 μm, a film resistance becomes so large that a quality of electrochemical devices tends to decrease. The film thickness can be controlled with a solution concentration and a thickness cast on a substrate.

Plasticizers, stabilizers, and mold release agents used for conventional polymers may be added to the block copolymer of the invention in order to improve various physical properties of the film. The copolymer of the invention may be complexly alloyed with other polymers, for example, by dissolving the polymer compound of the invention together with other polymers in a same solvent, followed by casting a solution obtained.

It is well known for fuel cell usage that inorganic or organic fine particles are added as a water retention agent in order to make water content in the film manageable. Such known methods may be applied as long as not violating the object of the invention.

In order to enhance mechanical strength of the film, the film may be crosslinked by irradiation of electron beams or radioactive rays. Furthermore, it is known that the film may be reinforced by impregnating in a porous film or sheet to form a complex film or by mixing with fibers or pulps. These known methods may be applied as long as not violating the object of the invention.

The fuel cell of the invention is explained.

The fuel cell of the invention can be produced by conjugating a catalyst and an electrically conductive material as a collector on opposite faces of the film.

The catalyst is not particularly limited as long as being able to activate oxidation-reduction reaction of hydrogen and oxygen, and known catalysts may be used; and preferable is a fine particle of platinum. The platinum fine particle is often carried on particle or fiber-shaped carbons made of activated carbons or graphite, such platinum fine particle is also preferably used in the invention.

The electrically conductive material as a collector also may use known materials; preferable are porous carbon fabric, carbon non-woven fabric, or carbon paper in order to effectively transport a feedstock gas to a catalyst.

Ways for conjugating a platinum fine particle or a carbon carrying a platinum fine particle with a porous carbon

non-woven fabric or carbon paper, and for conjugating the thus conjugated with a polymer electrolyte film may use known methods, for example, described in J. Electrochem.Soc.: Electrochemical Science and Technology, 1988, 135 (9), 2209.

The polymer compound of the invention is also useful for a proton conductive material which is one of components of a catalyst composition which constitutes a catalyst layer of polymer electrolyte fuel cells.

Thus produced fuel cell of the invention is applicable to various type of fuel cells of which fuel is hydrogen gas, reformed hydrogen gases, methanol, or the like.

(Examples)

The invention is explained in more detail referring to Examples, but should not be construed to be limited thereto.

The molecular weights described in Example are a number-average molecular weight (Mn) in terms of polystyrene standard determined by a gel permeation chromatography (GPC) under the following conditions.GPC analyzer: HLC-8220 produced by TOSOH, Column: KD-80M+KD-803 produced by Shodex, column temperature of 40 °C, mobile phase solvent of DMAc (with addition of LiBr of 10 mmol/dm$^3$), and solvent flow rate of 0.5 mL/min.

Example 1

Under an argon atmosphere, 3.84 g (14.5 mmol) of potassium 2,5-dichlorobenzenesulfonate, 6.23 g (39.88 mmol, 2.75 eq) of 2,2'-bipyridyl, and 70 mL of DMSO were put into a flask, followed by heating up to a temperature of 80 ° C under stirring and then addition of 9.97 g (36.25 mmol, 2.5 eq) of bis(1,5-cyclooctadiene)nickel(0) at the temperature. The mixture, thereafter, was kept at the temperature for 5 hours under stirring. After being standing to be cooled to a room temperature, the reactant mixture was poured into an excess amount of methanol to generate a black color polymer; the polymer generated was collected by filtration, washed with aqueous HCl solution of 6 mol/dm$^3$, and then dispersed into aqueous HCl solution of 6 mol/dm$^3$ to be subjected to dialysis with a dialysis membrane to remove salts; thereafter water contained was removed under reduced pressure to obtain 1.19 g of polyparaphenylene sulfonic acid. The molecular weight of the polymer obtained is shown below, of which value was same to the molecular weight of a sample sampled at 3 hours after keeping temperature.

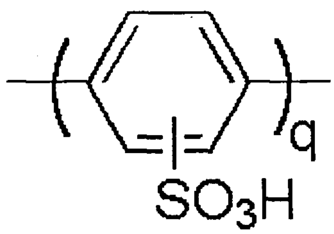

$$Mn=2.4\times10^5 \quad q+r\fallingdotseq1500 \quad (r=0)$$

The polymer compound obtained had favorable film forming ability, no cracks, favorable solvent resistability with no weight loss.

Example 2

Except for heating up to a temperature of 45 ° C, adding bis(1,5-cyclooctadiene)nickel(0) at the temperature, and then heating up to a temperature of 80 ° C over 1 hour, followed by being kept at the latter temperature for 5 hours, the experiment was carried out according to the manner of Example 1 to obtain 1. 03 g of polyparaphenylene sulfonic acid. The molecular weight of the polymer obtained is shown below, of which value was same to the molecular weight of a sample sampled in 3 hours after keeping temperature.

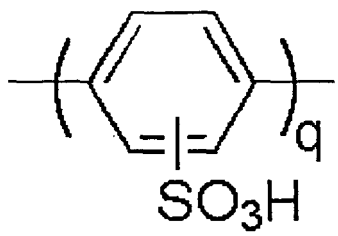

$$Mn=7.0\times10^{4}\quad q+r\fallingdotseq400\ (r=0)$$

The polymer compound obtained had favorable film forming ability, no cracks, favorable solvent resistability with no weight loss.

Example 3

Except for using 1.50 g (5.66 mmol) of potassium 2,5-dichlorobenzenesulfonate, 3.98 g (15.84 mmol) of 2,5-dichlorobenzophenone, and 9.72 g (62.23 mmol, 2.89 eq) of 2,2'-bipyridyl, heating up to a temperature of 60 °C and then adding 15.56 g (56.57 mmol, 2.63 eq) of bis(1,5-cyclooctadiene)nickel(0) at the temperature, followed by heating up to a temperature of 80 °C over 1 hour, and thereafter being kept at the latter temperature for 6 hours, the experiment was carried out according to the manner of Example 1. After being standing to be cooled, the reactant mixture was poured into aqueous HCl solution of 6 mol/$dm^3$ to precipitate, the precipitated was collected by filtration, washed several times with aqueous HCl solution of 6 mol/$dm^3$, dispersed into boiling water for 2 hours under stirring, and then collected by filtration. This sequence of washing treatments was repeated twice to obtain 3.70 g of polyparaphenylene sulfonic acid. The molecular weight of the polymer obtained is shown below, of which value was same to the molecular weight of a sample sampled in 3 hours after keeping temperature.

$$Mn=2.6\times10^{5}\quad q+r\fallingdotseq1500\ (q\fallingdotseq400,\ r\fallingdotseq1100)$$

The polymer compound obtained had favorable film forming ability, no cracks, favorable solvent resistability with no weight loss.

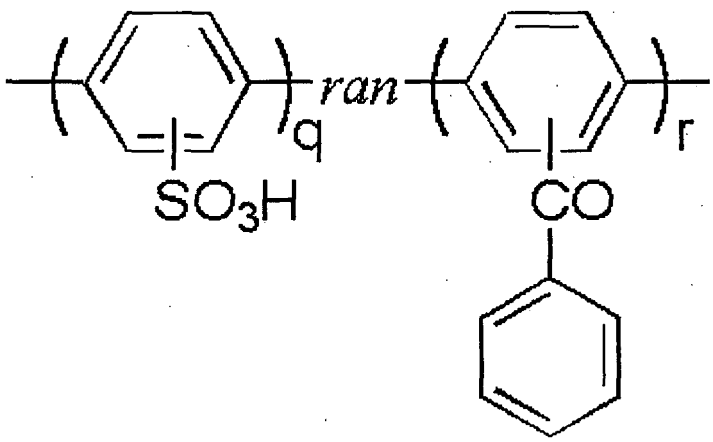

Comparative Example 1

Except for using 1.92 g (7.25 mmol) of potassium 2,5-dichlorobenzenesulfonate, 3.12 g (19.94 mmol, 2.75 eq) of 2,2'-bipyridyl, and 30 mL of DMSO, adding 4.99 g (18.13 mmol, 2.5 eq) of bis(1,5-cyclooctadiene)nickel(0) at a temperature of 25 °C, thereafter, heating up to a temperature of 80 °C over 1 hour and then being kept at the latter

temperature for 5 hours, the experiment was carried out according to the manner of Example 1 to obtain 0.51 g of polyparaphenylene sulfonic acid. The molecular weight of the polymer obtained is shown below, of which value was same to the molecular weight of a sample sampled in 3 hours after keeping temperature.

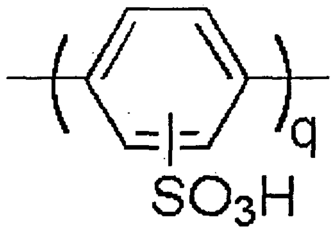

$$Mn=2.3\times10^3 \quad q+r \fallingdotseq 14 \quad (r=0)$$

The polymer compound obtained was inferior in film forming ability and solvent resistability.

Industrial Applicability

The method of the invention can provide, by mixing a condensation reagent and monomer (s) at a specific temperature of 45 ° C or more, a polymer compound having excellent properties required for an ingredient of fuel cells such as water resistability, solvent resistability and the like. The polymer compound obtained also has an advantage of high molecular weight.

## Claims

1. A method for producing a polymer compound, wherein said method comprises a method for polymerizing a monomer represented by the following formula (1) in the presence of a condensation reagent to produce a homopolymer:

$$X^1\text{-}Ar^1\text{-}X^2 \qquad (1)$$

(wherein $X^1$ and $X^2$ independently represent groups to be eliminated in condensation, and $Ar^1$ represents di-valent aromatic group having a substituent group comprising at least a sulfonic acid or a salt thereof, or a sulfonic acid via a connecting group or a salt thereof), or for copolymerizing a monomer represented by the above-described formula (1) and a monomer represented by the following formula (2) in the presence of the condensation reagent to produce a copolymer represented by the following formula (3):

$$X^3\text{-}Ar^2\text{-}X^4 \qquad (2)$$

(wherein $X^3$ and $X^4$ independently represent groups to be eliminated in condensation, and $Ar^2$ represents di-valent aromatic group optionally having a substituent group),

$$\text{-}(Ar^1)q\text{-}(Ar^2)r\text{-} \qquad (3)$$

(wherein $Ar^1$ and $Ar^2$ respectively represent the same meanings described above, q represents a positive number, r represents 0 or a positive number, and the sum of q and r is 300 or more) ;and wherein said condensation reagent and said monomer (s) are mixed at a temperature of 45°C or more.

2. The method according to Claim 1, wherein the condensation agent is a transition metal complex.

3. The method according to Claim 2, wherein the transition metal complex is a zero-valent transition metal complex.

4. The method according to Claim 3, wherein the zero-valent transition metal complex comprises at least one selected

from the group consisting of a zero-valent nickel complex and zero-valent palladium complex.

5. The method according to Claim 4, wherein the zero-valent nickel complex is bis(1,5-cyclooctadiene)nickel(0).

6. The method according to any one of Claims 2 to 5, wherein 2,2'-bipyridyl is further co-present.

7. A polymer compound produced by any one of methods according to Claims 1 to 5.

8. The polymer compound according to Claim 7, comprising the formula (3) and having a number-average molecular weight of $5 \times 10^4$ or more in terms of polystyrene standard.

9. The polymer compound according to Claims 7 or 8, having an ion-exchange capacity of 0.8 meq/g or more.

10. A polymer electrolyte comprising an ingredient comprising the polymer compound(s) according to Claims 7 to 9.

11. A polymer electrolyte membrane comprising the polymer electrolyte according to Claim 10.

12. A catalyst composition comprising the polymer electrolyte according to Claim 10.

13. A polymer electrolyte fuel cell comprising the polymer electrolyte membrane according to Claim 11.

14. A polymer electrolyte fuel cell comprising the catalyst composition according to Claim 12.

**INTERNATIONAL SEARCH REPORT**

International application No.
PCT/JP2005/001865

A. CLASSIFICATION OF SUBJECT MATTER
Int.Cl[7] C08G61/00, H01B1/06, H01M8/02

According to International Patent Classification (IPC) or to both national classification and IPC

B. FIELDS SEARCHED

Minimum documentation searched (classification system followed by classification symbols)
Int.Cl[7] C08G61/00-61/12, H01B1/06, H01M8/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2003-238665 A (Sumitomo Chemical Co., Ltd.), 27 August, 2003 (27.08.03), Full text (Family: none) | 1-11,13<br>12,14 |
| P,A | JP 2004-83637 A (Sumitomo Chemical Co., Ltd.), 18 March, 2004 (18.03.04), Full text (Family: none) | 1-14 |
| A | JP 2002-338665 A (Sumitomo Chemical Co., Ltd.), 27 November, 2002 (27.11.02), Full text & US 2002-177687 A1 & EP 1229063 A2 | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>16 May, 2005 (16.05.05) | Date of mailing of the international search report<br>31 May, 2005 (31.05.05) |
| Name and mailing address of the ISA/<br>Japanese Patent Office<br>Facsimile No. | Authorized officer<br><br>Telephone No. |

Form PCT/ISA/210 (second sheet) (January 2004)

**INTERNATIONAL SEARCH REPORT**

International application No.
PCT/JP2005/001865

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-289222 A (Mitsui Chemicals, Inc.), 04 October, 2002 (04.10.02), Full text (Family: none) | 1-14 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003238665 A


### Non-patent literature cited in the description


- *J. Electrochem.Soc.: Electrochemical Science and Technology,* 1988, vol. 135 (9), 2209